**Europäisches Patentamt**

**European Patent Office**

**Office européen des brevets**

⑩

(11) Publication number: **0 209 898**
**B1**

(12) # EUROPEAN PATENT SPECIFICATION

(45) Date of publication of patent specification: **03.01.90**

(21) Application number: **86110126.9**

(22) Date of filing: **23.07.86**

(51) Int. Cl.⁵: **F 28 F 25/08, B 01 D 53/18**

(54) Film-flow packing.

(30) Priority: **23.07.85 HU 279685**

(43) Date of publication of application:
**28.01.87 Bulletin 87/05**

(45) Publication of the grant of the patent:
**03.01.90 Bulletin 90/01**

(84) Designated Contracting States:
**AT BE CH DE FR GB IT LI NL SE**

(56) References cited:
| | |
|---|---|
| EP-A-0 038 913 | GB-A-1 170 940 |
| EP-A-0 115 455 | GB-A-1 175 911 |
| EP-A-0 117 077 | GB-A-1 221 073 |
| EP-A-0 138 401 | US-A-2 661 197 |
| DE-A-2 313 418 | US-A-3 415 502 |
| FR-A-2 203 671 | US-A-3 442 494 |
| FR-A-2 255 568 | US-A-3 947 532 |
| GB-A-1 080 991 | US-A-3 994 999 |

(73) Proprietor: **ENERGIAGAZDALKODASI INTEZET**
**33-34, Bem-rakpart**
**H-1027 Budapest II (HU)**

(73) Proprietor: **VILLAMOSENENERGIAIPARI**
**KUTATO INTEZET**
**Zrinyi utca 1**
**H-1051 Budapest (HU)**

(72) Inventor: **Abonyi, Mihaly**
**Bokai Arpad u. 48**
**H-1181 Budapest (HU)**
Inventor: **Bakay, Arpád, Dr.**
**Riadó u. 8/a.**
**H-1026 Budapest (HU)**
Inventor: **Bergmann, György**
**Karpat u.40**
**1133 Budapest (HU)**
Inventor: **Bódás, János**
**Fillér u. 41**
**H-1026 Budapest (HU)**
Inventor: **Gösi, Péter, Dr.**
**Felsözöldmáli u. 5/b**
**H-1025 Budapest (HU)**
Inventor: **Kovács, Gyula**
**Vérhalom u. 43**
**H-1025 Budapest (HU)**
Inventor: **Pohl, Oszkár**
**Szépvölgyi u. 3/a**
**H-1036 Budapest (HU)**

Courier Press, Leamington Spa, England.

**EP 0 209 898 B1**

(74) Representative: **Eitle, Werner, Dipl.-Ing. et al
Hoffmann, Eitle & Partner Patentanwälte
Arabellastrasse 4
D-8000 München 81 (DE)**

**Description**

This invention relates to film-flow packings for apparatus for performing heat- and material-exchanges between a liquid and a gaseous medium, particularly for cooling towers and degassing units, comprising juxtaposed contiguous cooling sheets with fluid conducting open channels from top edge to bottom edge, following protracted sinuous lines in the form of undulations having parallel medial lines, mutually opposite open channels of a pair of adjacent cooling sheets being mutually offset along the medial lines while, in a projection at right angle to the cooling sheets, the open channels cross and form a system of interconnected passages. Such a packing is known from EP—A—0 115 455.

Such exchange occurs e.g. in cooling towers where water and air meet each other in counter- or cross-flow while heat and vapour of the water are partly taken over by the air. In principle, a similar process is taking place in degassing units where, however, removal of gas contained by the liquid is aimed at rather than extraction of its heat. In both cases, the basic principle of operation consists in providing a possibly large contact surface for the interacting media which is obtained by units known in the art as film-flow packings.

Film-flow packings are, usually, composed of juxtaposed cooling sheets with medium conducting open channels having parallel medial lines. As will be seen, the term "medial line" is used to denote the principal direction of a channel. In operation, the cooling sheets occupy practically vertical positions. A liquid such as water is brought into the cooling sheets from above e.g. by means of spray nozzles. The liquid is, as it were, spread out by the channels of the cooling sheets and, thus, contacts a gaseous medium such as air flowing upwardly or in transverse direction between the cooling sheets at relatively large surface areas.

The art knows of packings the channels of which follow zigzag lines composed of straight sections. Such packings are disclosed e.g. in GB—A—1 221 073. Zigzag lines, however, represent sharp directional changes at which possible impurities contained by a downwardly flowing liquid may stick and settle. Such depositions may gradually obstruct the packing and entail a rapid increase of its air resistance which, eventually, impairs operability.

It has been proposed to avoid such difficulties by employing channels of sinuous or arcuate shape as described e.g. in EP—A—0 115 455.

Such curvature of the channels is indispensable if cloggings have to be avoided. However, there are places in the packing where flow resistance is caused to appear without gaining anything thereby. Such places are where interacting fluids enter into and withdraw from the packing, respectively. With the known film-flow packings entries and exits of fluids were, as it seems, unheeded places of turbulence causing considerable increases of flow resistance without any use as to the performance of cooling. For instance, the cooling sheets of the packings described in the above mentioned GB—A—1 221 073 have straight or flat surfaces at their upper and lower ends by which incoming and withdrawing fluid streams undergo some baffling before and after their courses in intermediate packing portions. However, the cooling sheets of the known device are mutually distanced and, thus, the rooms between their flat terminal surfaces are common to all channels which means vigorous turbulence of fluids entering into or withdrawing from the packing. On the other hand, the aforesaid EP—A—0 115 455 discloses packings with no discharge sections at all. Here entering agents strike directly against the edges of slant open channels without any baffling. Consequently, flow resistance caused by turbulence is even greater than in the former case. EP—A—0 038 913 discloses a packing for a heat exchanger in which improved turbulent flow is obtained. There is no suggestion of promoting laminar flow at inflow and outflow locations.

The object of the present invention is to modify the flow conditions at such places so as to render the inflow and outflow of the interacting agents laminar rather than turbulent.

According to the invention, the film-flow packing initially defined is characterised in that: at top and bottom edges in each pair of adjacent cooling sheets the open channels terminate in straight discharge channel sections and the cooling sheets occupy relative positions in which the straight discharge channel sections of the open channels in a pair of adjacent cooling sheets are in register with one another whereby individual closed discharge passages parallel to the medial lines are formed and are separated from one another and from the side edges of the cooling sheets by plane support surface areas at which adjacent cooling sheets abut against one another and are mutually fixed.

Thus, the film-packing according to the invention is distinguished, in addition to low flow resistance at its discharge extremities, also by relatively high rigidity of structure, all due to the closed and straight discharge channel sections which ensure, on the one hand, substantially laminar flow at the entry and the exit of fluids and, on the other hand, large contacting surface areas for mutual fixing and support of juxtaposed contiguous cooling sheets.

Within a packing the cooling sheets may be subdivided into groups which are separated from one another by strut plates extending beyond the cooling sheets. By such arrangement vertically disposed cooling sheets will obviously be relieved from static loads so that they may be made of very thin foils which favours useful surface per unit volume. The groups may form blocks superposed one above the other with gaps therebetween while the cooling sheets are arranged edgewise in the direction of superposition. Moreover, subsequent blocks are angularly displaced by 90° with respect to one another.

With such arrangement the gaps are automatically ensured by the strut plates of different blocks abutting crosswise against one another.

Hereinafter the invention will be described by way of example in greater detail by making reference to the accompanying drawings in which:

Fig. 1 is a perspective view of a packing with typical features;

Fig. 2 illustrates a pattern characteristic of an arrangement of channels;

Fig. 3 represents a further pattern of channel arrangement;

Fig. 4 shows a front-elevational view of a pair of adjacent cooling sheets of an exemplified packing embodying the invention;

Fig. 5 is a sectional view taken along line V—V of Fig. 4;

Fig. 6 illustrates a sectional view taken along line VI—VI of Fig. 4;

Fig. 7 represents a front-elevational view of a detail of a cooling sheet;

Fig. 8 shows a sectional view taken along line VIII—VIII of Fig. 7;

Fig. 9 is a front-elevational view of a further exemplified embodiment of the packing according to the invention;

Fig. 10 illustrates a side-elevational view in accordance with Fig. 9;

Fig. 11 represents a front-elevational view of still another exemplified embodiment of the packing according to the invention; and

Fig. 12 shows a sectional view taken along line XII—XII of Fig. 11.

Same reference numerals designate similar details throughout the drawings.

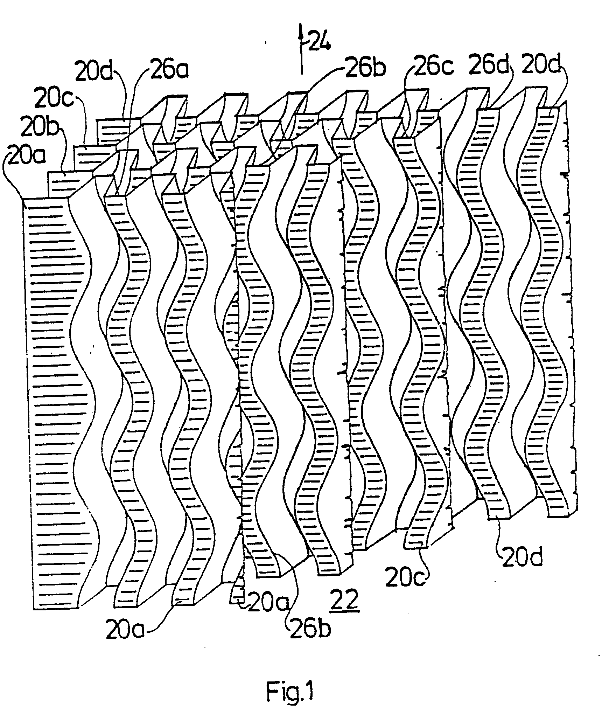

Fig. 1 illustrates a packing consisting, for sake of simplicity, but of four cooling sheets 20a, 20b, 20c and 20d. Obviously, the number of cooling sheets may be different from what is shown in Fig. 1 as is known in the art.

The cooling sheets 20a, 20b, 20c and 20d are flatwise juxtaposed and are, in a manner known *per se*, provided with open channels 26a, 26b, 26c and 26d arranged in the same principal direction 24. As will be seen, pairs of adjacent open channels on one side of the cooling sheets enclose open channels on the other side thereof. Thus, each cooling sheet is channelled on both its sides as indicated by reference numeral 26b in case of cooling sheet 20b. It is always mutually opposite open channels which are decisive for the operation of the packings, e.g. open channels 26a of cooling sheet 20a facing channels 26b of cooling sheet 20b since they jointly form passages for the passing of flowing media.

Mutually opposite open channels such as open channels 26a of cooling sheet 20a and open channels 26b of cooling sheet 26b are offset with respect to one another in the principal direction 24.

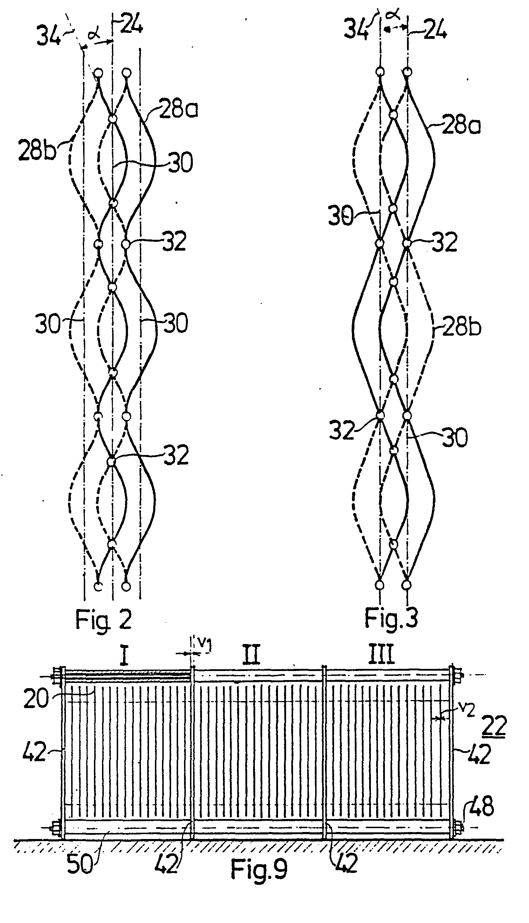

Due to such offset mutual positions the open channels intersect if viewed in a projection at right angle to the cooling sheets. This will be appreciated on the basis of Figs. 2 and 3 which show the pattern of channel arrangement in a pair of adjacent cooling sheets.

Continuous sinuous lines 28a indicate open channels in a front cooling sheet facing a rear cooling sheet while broken sinuous lines 28b indicate open channels in the rear cooling sheet and facing the front cooling sheet.

Both patterns differ from each other in that in case of Fig. 2 the sinuous lines have separate medial lines 30 and, therefore, the crests of line 28b are in back to back relation with the troughs of line 28a, or *vice versa*. In contrast, with the arrangement shown in Fig. 3, the medial lines 30 coincide or register with one another so that the sinuous lines of mutually opposite open channels meet at their base points where the lines 28a and 28b intersect with their medial lines 30. In a projection at right angle to the cooling sheets the points of meeting represent crossings 32 the significance of which has already been referred to and will be further explained hereinafter.

It will be appreciated that the patterns of channel arrangements according to Figs. 2 and 3 are characteristic of cases where sinuous lines 28a and 28b of mutually opposite open channels are shifted with respect to one another by half cycles which means reverse relative positions. Thereby a pattern of channel arrangement easy to survey is obtained with favourable design and technological conditions: the crossings 32 yield, in addition to well definable couplings between channels, the possibility of evenly distributed point-like glueings. The former expedient enhances uniform load distribution. The latter permits to obtain self-contained packings suitable to withstand manipulation loads even in case of packings composed of very thin cooling sheets.

Obviously, channel arrangement patterns with mutual shifts of other than half cycle values may be employed as well in which case mutually opposite open channels are shifted with respect to one another by a fractional value of half cycles. Even such, as it were, irregular mutual shifts permit couplings of the sinuous lines and, thereby, crossings of channels as can easily be proved on basis of Figs. 2 and 3. However, inconveniences as regards design work and technology have to be reckoned with.

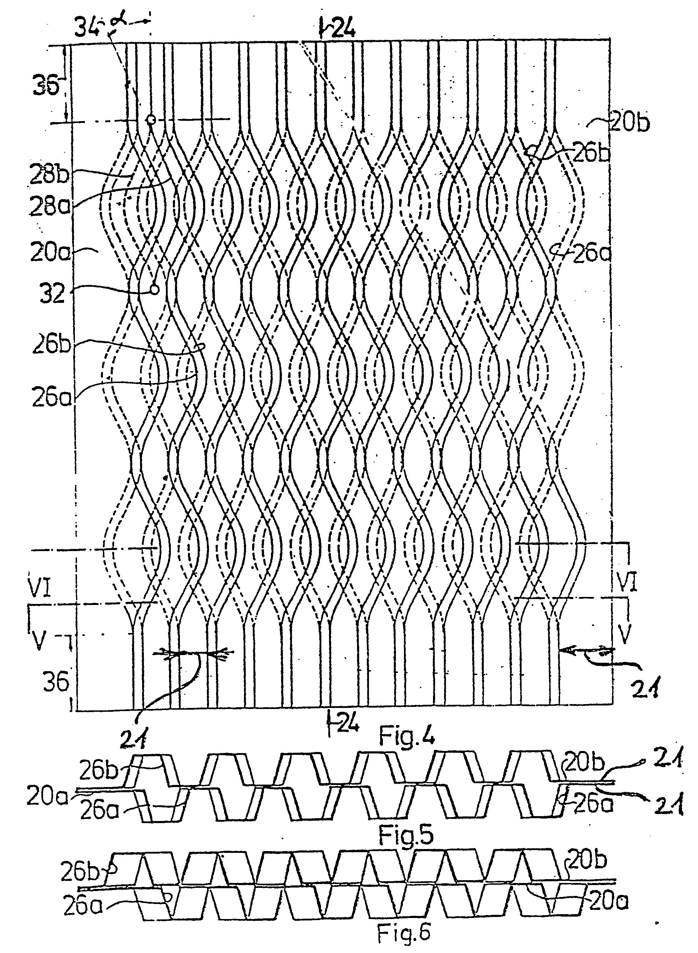

Figs. 4 to 6 show a pair of adjacent cooling sheets 20a and 20b with open channels 26a and 26b, respectively, arranged according to the pattern illustrated in Fig. 2. In the upper left corner of Fig. 4 sections of the sinuous lines 28a and 28b of the open channels have been represented as well which permits to exactly designate the channel crossings 32.

It will be seen that by means of their crossings 32 the channels 26a and 26b form a system of interconnected passages any point of which can be reached from any other point thereof. Such interconnection of open channels is clearly recognizable in the sectional view according to Fig. 5 where open channels 26a and 26b form common Z-shaped flow areas. Thus, a liquid flowing in one of the open channels can at least partly flow over into another open channel and reach parts of the passage system in which liquid flow has, for whatever reason, been caused to cease.

With the embodiment shown in Figs. 4 to 6 the open channels have discharge sections 36 which are parallel to the principal direction 24 of the channels 26a and 26b or, what is equivalent thereto, to their medial lines 30. As has been mentioned, such discharge sections permit laminar inflow and outflow of interacting agents that is a relatively low flow resistance at reaching and leaving the packing.

The angle enclosed, on the one hand, by the tangents 34 to the sinuous lines 28a and 28b of the open channels 26a and 26b, respectively, and, on the other hand, by their medial lines 30 is smaller than 45°. Preferably, it will be an acute angle of about 25° such as the angle *alpha* in Figs. 2 and 3. At such values of the angle *alpha* the sinuous lines 28a and 28b are, on the one hand, sufficiently arcuate or bulging to permit their crossings and, on the other hand, protracted enough to prevent depositions of impurities.

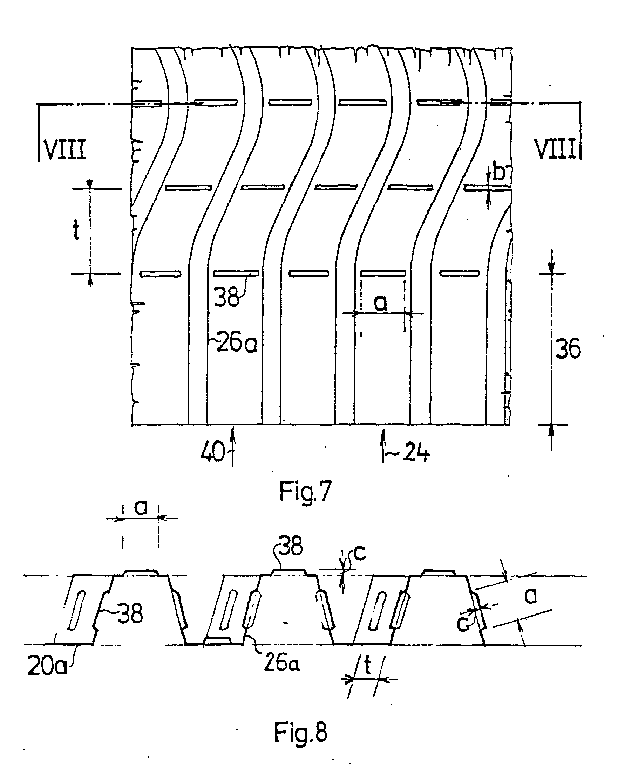

Figs. 7 and 8 show an embodiment which constitutes an improvement of the cooling sheet 20a illustrated in Figs. 4 to 6 in that its open channels 26a are provided with ridges 38 in their walls. The ridges 38 are transverse of the principal direction 24 of the open channels and, thus, of their medial lines 30 indicated in Figs. 2 and 3. They are destined to cease the flow of laminar nature of an agent introduced in the direction of arrow 40 by tearing up its boundary layers and, thereby, to produce a turbulent flow in the arcuate sections of the open channels to enhance mixing. It will be appreciated that the walls of the discharge sections 36 have, in the present case, smooth surfaces since here a laminar flow may, for reasons already stated, be preferable.

With the represented embodiment the open channels 26a have cross-sectional areas in the shape of protracted trapezoids as goes forth from Fig. 8. Both the oblique side walls of the open channels and their bottom portions which are parallel to the plane of the cooling sheet 20a are provided with ridges 38. Length *a* and spacing *t* of the ridges 38 are likewise multiples of the width *b* and height *c* thereof. Obviously, length *a* will be in concordance with the place at disposal. Thus, in the present case, the ridges 38 in the bottom portions of the open channels 26a are shorter than the ridges in their oblique walls.

However, the open channels may have cross-sectional areas of other than trapezoidal shape, e.g. semicircular or rectangular cross-sectional areas may be selected as well. In the former case also the ridges are arcuate. If, in the latter case, the open channels are relatively narrow, preferably but the side walls will be provided with ridges.

As is known, the packings are the more effective the larger the useful surface per unit volume. The latter is, among other things, the larger the thinner the cooling sheets since then relatively more cooling sheets can be located within a given volume. On the other hand, in case of thin cooling sheets also the resistance of the packing against gas flow is relatively smaller.

The thickness of the cooling sheets of the packings will preferably amount to 0.1 to 0.8 millimeters. If the cooling sheets are made of very thin plastics sheets of a thickness such as 0.1 to 0.3 millimeters, the packing is easily liable to damages during handling and mounting operations. In order to exclude such undesired possibilities the cooling sheets will preferably be subdivided into groups and separated from one another by strut plates which, on all sides, extend beyond the cooling sheets.

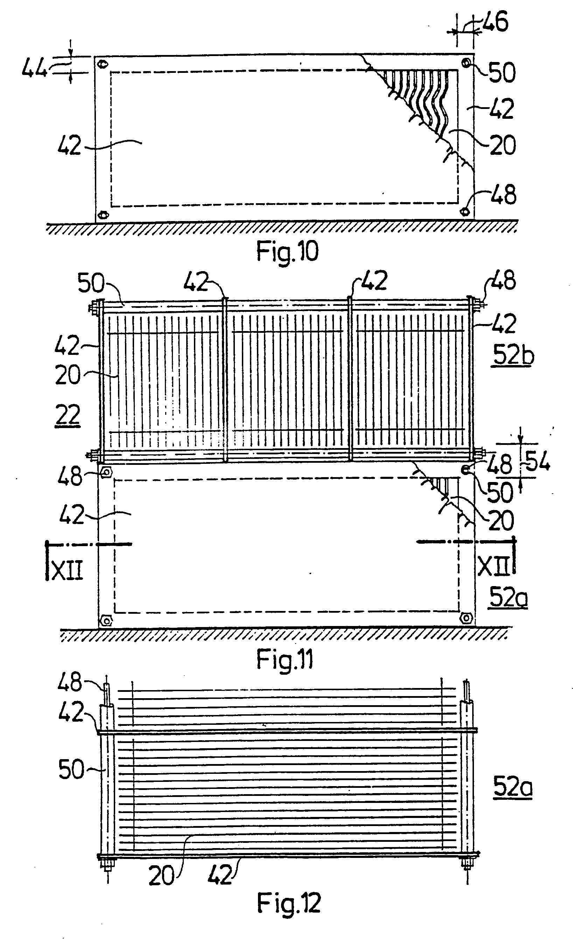

An embodiment with groups of cooling sheets and strut plates between the groups is illustrated in Figs. 9 and 10. With the represented embodiment the packing 22 (Fig. 9) is composed of cooling sheets 20 which form three groups I, II and III each comprising preferably 10 to 15 cooling sheets. The groups I, II and III are separated from one another by strut plates 42 made of relatively thicker material. Both extremities of the packing 22 are closed also by such strut plates 42.

The thickness of the strut plates 42 is a multiple of the thickness v2 of the cooling sheets 20, preferably they are 2 to 5 times as thick. Thus, e.g. in case of cooling sheets 20 of a thickness of 0.3 millimeter the thickness of the strut plates 42 will amount to 0.6 to 1.5 millimeters. Also the width and length of the strut plates 42 are greater than those of the cooling sheets 20 so that they reach beyond the latter by 5 to 10 millimeters as indicated by reference numerals 44 and 46 in Fig. 10. The advantage of such overhangs 44 and 46 consists in that the cooling sheets 20 are exempt from static loads in whatever positions of the packing 22 since it is always the strut plates 42 which are responsible for the support of the packing.

With the represented embodiment the groups I, II and III are held together by through bolts 48 traversing the strut plates 42. Mutual distances of the latter are fixed by spacer sleeves 50 on the through bolts 48. However, instead of bolts and spacers the groups of cooling sheets can be connected with their strut plates by means of glueing in which case the packing represents a cemented block of cooling sheets and strut plates.

Furthermore, the packing may, e.g. for the purpose of increased efficiency or for constructional reasons, consist of superposed blocks of cooling sheets in the manner of a column. A reason of constructional nature may be exemplified by blocks of cooling sheets which have open channels representing one complete cycle of a sinuous line only. Then, packings with open channels having a desired number of complete cycles may be obtained by superimposing a suitable number of blocks the cooling sheets of each of which have open channels of one cycle long only. Such expedient permits to build a wide range of packings out of prefabricated uniform elements.

A packing 22 composed of a pair of superimposed blocks 52a and 52b is illustrated in Figs. 11 and 12. As will be seen, the blocks 52a and 52b are supported by strut plates 42 so that the edgewise positioned cooling sheets 20 are relieved from static loads here as well. Moreover, the cooling sheets 20 of the blocks 52a and 52b are separated from one another by gaps 54 which permits a liquid leaving an upper block to spread out prior to entering a subsequent block. Thereby, a more uniform mixing with a gaseous medium flowing in counter current with the liquid will be obtained.

Such effective mixing may even be improved if the superimposed blocks 52a and 52b are angularly displaced by an angle of 90° with respect to one another around a vertical axis of the column of superimposed blocks in which case the gaps 54 are automatically ensured by mutually abutting strut plates 42 as has relady been mentioned. Then, films of a liquid discharged from the upper block 52b are, in addition to being spread out in the gap 54, forced to enter between the cooling sheets 20 of the lower block 52a with a sharp change of orientation by which, again, mixing of the interacting agents is considerably enhanced.

On the basis of what has been explained hereinbefore, operation of the packings does not seem to need detailed description.

A liquid such as water is discharged from spraying nozzles (not shown) above the packings 22 into channels of its cooling sheets 20 and advances thereon in the form of films. Meanwhile, laminar flow with possibly low flow resistance in the straight discharge sections 36 where the channels are closed is transformed into turbulent flow in the sinuously shaped channels. At the same time, a gaseous medium, e.g. air, enters the packing 22 from below in a similar manner and flows upwards between the cooling sheets 20. As both agents meet in the packing 22, an interaction therebetween takes place. In the course of such interaction the gaseous medium takes over a portion of the heat and vapours of the liquid and leaves the packing 22 in upward direction while its turbulent flow is retransformed into laminar flow. The liquid with possible absorbed portions of the gaseous medium is discharged at the bottom of the packing 22 in a similar manner. Due to such heat- and material-exchange the liquid is cooled down and the gaseous medium is warmed up as is known from the operation of e.g. conventional cooling towers.

## Claims

1. Film-flow packing for apparatus for performing heat and material exchange between a liquid and a gaseous medium, particularly for cooling towers and degassing units, comprising juxtaposed contiguous cooling sheets (20a, 20b) with fluid conducting open channels (26b) from top edge to bottom edge, following protracted sinuous lines in the form of undulations having parallel medial lines (30), mutually opposite open channels of a pair of adjacent cooling sheets being mutually offset along the medial lines while, in a projection at right angles to the cooling sheets, the open channels cross and form a system of interconnected passages, characterised in that:

at top and bottom edges in each pair of adjacent cooling sheets (20a, 20b) the open channels (26a, 26b) terminate in straight discharge channel sections (36) and the cooling sheets (20a, 20b) occupy relative positions in which the straight discharge channel sections (36) of the open channels (26a, 26b) in a pair of adjacent cooling sheets (20a, 20b) are in register with one another whereby individual closed discharge passages parallel to the medial lines (30) are formed and are separated from one another and from the side edges of the cooling sheets (20a, 20b) by plane support surface areas (21) at which adjacent cooling sheets abut against one another and are mutually fixed.

2. Packing as claimed in claim 1, characterised in that
mutually opposite sinuous channels (26a, 26b) are offset with respect to one another by half cycles of sinuosity.

3. Packing as claimed in claim 1 or 2, characterised in that
the tangents (34) of sinuous lines (28a) of the channels (26a) and their medial lines (30) enclose an acute angle smaller than 45° and preferably not greater than 25° (Fig. 3).

4. Packing as claimed in any one of claims 1 to 3, characterised in that
the channels (26a) have ridges (38) in their walls transverse of their medial lines (30).

5. Packing as claimed in claim 4, characterised in that
length (a) and spacing (t) of the ridges (38) are multiples of their widths (b).

6. Packing as claimed in any one of claims 1 to 5, characterised in that
the cooling sheets (20) are subdivided into groups (I, II, III) separated from one another by strut plates (42) extending beyond the cooling sheets.

7. Packing as claimed in claim 6, characterised in that
the groups (I, II, III) form blocks (52a, 52b) superposed one above the other with gaps (54) therebetween, the cooling sheets (20) occupying edgewise positions in the direction of superposition in which the blocks have angular positions displaced by 90° with respect to one another (Fig. 11).

8. Packing according to any one of the preceding claims, wherein two of said support surface areas (21) extend along said side edges to form respective border regions of the packing.

## Patentansprüche

1. Filmströmungspackung für eine Vorrichtung zur Ausführung eines Wärme- und Materialaustausches zwischen einer Flüssigkeit und einem gasförmigen Medium, insbesondere für Kühl-

türme und Entgasungseinheiten, mit nebeneinander angeordneten angrenzenden Kühlplatten (20a, 20b) mit fluidführenden, offenen Kanälen (26b) von einem oberen Rand bis zu einem unteren Rand, die gestreckten Sinuslinien in Form von Wellen mit parallelen Mittellinien (30) folgen, wobei wechselweise gegenüberliegende, offene Kanäle eines Paares von benachbarten Kühlplatten wechselweise versetzt entlang der Mittellinien sind, während in einer Projektion im rechten Winkel zu den Kühlplatten die offenen Kanäle sich kreuzen und ein System von miteinander verbundenen Kanälen bilden, dadurch gekennzeichnet, daß: an den oberen und unteren Rändern in jedem Paar von benachbarten Kühlplatten (20a, 20b) die offenen Kanäle (26a, 26b) in geraden Ableitkanalabschnitten (36) enden und die Kühlplatten (20a, 20b) Relativstellungen einnehmen, in welchen die geraden Ableitkanalabschnitte (36) der offenen Kanäle (26a, 26b) in einem Paar von benachbarten Kühlplatten (20a, 20b) miteinander fluchten, wobei einzelne geschlossene Ableitkanäle parallel zu den Mittellinien (30) gebildet sind und voneinander und von den Seitenrändern der Kühlplatten (20a, 20b) durch ebene Tragflächenbereiche (21) getrennt sind, an denen benachbarte Kühlplatten gegeneinander anliegen und wechselweise befestigt sind.

2. Packung nach Anspruch 1, dadurch gekennzeichnet, daß wechselseitig gegenüberliegende Sinuskanäle (26a, 26b) bezüglich einander um halbe Zyklen der Schlagenkrümmung versetzt sind.

3. Packung nach Anspruch 1 oder 2, dadurch gekennzeichnet, daß die Tangenten (34) der Sinuslinien (28a) der Kanäle (26a) und ihre Mittellinien (30) einen spitzen Winkel einschließen, der kleiner als 45° und vorteilhafterweise nicht größer als 25° ist (Fig. 3).

4. Packung nach einem der Ansprüche 1 bis 3, dadurch gekennzeichnet, daß die Kanäle (26a) Rippen (38) in ihren Wänden quer zu den Mittellinien (30) aufweisen.

5. Packung nach Anspruch 4, dadurch gekennzeichnet, daß die Länge (a) und der Abstand (t) der Rippen (38) Vielfache ihrer Breite (b) sind.

6. Packung nach einem der Ansprüche 1 bis 5, dadurch gekennzeichnet, daß die Kühlplatten (20) in Gruppen (I, II, III) unterteilt sind, die durch Druckplatten (42) voneinander getrennt sind, die sich über die Kühlplatten hinaus erstrecken.

7. Packung nach Anspruch 6, dadurch gekennzeichnet, daß die Gruppen (I, II, III) Blöcke (52a, 52b) bilden, die übereinander unter Bildung von Lücken (54) dazwischen ausgebildet werden, wobei die Kühlplatten (20) hochkante Stellungen in Richtung der Übereinanderordnung einnehmen, in welchen die Blöcke Winkelstellungen aufweisen, die bezüglich einander um 90° versetzt sind (Fig. 11).

8. Packung nach einem der vorhergehenden Ansprüche, wobei zwei der Lagerflächenbereiche (21) sich entlang der Seitenränder erstrecken, um entsprechende Grenzbereiche der Packung zu bilden.

## Revendications

1. Un garnissage pour écoulement en forme de pellicule mince ou écoulement filmogène pour un appareil permettant l'échange de matière et de chaleur entre un milieu liquide et un milieu gazeux, particulièrement pour des tours de refroidissement et des unités de dégazage, comprenant des plaques de refroidissement contiguës et juxtaposées (20a, 20b) présentant entre un bord supérieur et leur bord inférieur des canaux ouverts de guidage de fluide (26b), formant des lignes sinueuses consistant en des ondulations selon des lignes moyennes parallèles (30), les canaux ouverts réciproquement opposés d'une paire de plaques de refroidissement adjacentes étant réciproquement décalées par rapport aux lignes moyennes alors que, vu selon une direction perpendiculaire aux plaques de refroidissement, les canaux ouverts se croisent en formant un système de passages interconnectés, caractérisé en ce que: aux bords inférieur et supérieur dans chaque paire de plaques de refroidissement adjacentes (20a, 20b) les canaux ouverts (26a, 26b) se terminent en des portions rectilignes de canal de décharge (36) et en ce que les plaques de refroidissement (20a, 20b) occupent des positions relatives dans lesquelles les portions rectilignes de canal de décharge (36) des canaux ouverts (26a, 26b), dans une paire de plaques de refroidissement adjacentes (20a, 20b) coïncident l'une avec l'autre ce qui permet de former des passages de décharge séparés individuels parallèles aux lignes moyennes (30) et de les séparer les uns des autres et des bords latéraux des plaques de refroidissement (20a, 20b) par des surfaces de soutien planes (21) sur lesquelles des plaques de refroidissement adjacentes viennent un butée at auxquelles elles sont fixées mutuellement.

2. Un garnissage selon la revendication 1, caractérisé en ce que des canaux sineux réciproquement opposés (26a, 26b) sont décalés les uns par rapport aux autres par des demi cycles de sinuosité.

3. Un garnissage selon la revendication 1 ou 2, caractérisé en ce que les tangentes (34) aux lignes sinueuses (28a) des canaux (26a) et leurs lignes moyennes (30) forment un angle aigu inférieur à 45° et de préférence au plus égal à 25° (figure 3).

4. Un garnissage selon l'une quelconque des revendications 1 à 3, caractérisé en ce que les canaux (26a) présentent des nervures (38) dans leurs parois transversales à leurs lignes moyennes (30).

5. Un garnissage selon la revendication 4, caractérisé en ce que la longueur (a) et l'espacement (t) des nervures (38) sont des multiples de leurs largeurs (b).

6. Un garnissage selon l'une quelconque des revendications 1 à 5, caractérisé en ce que

Les plaques de refroidissement (20) sont subdivisées en groupes (I, II, III) séparés les uns des autres par des plaques d'étançonnement (42) s'étendant au-delà des plaques de refroidissement.

7. Un garnissage selon la revendication 6, caractérisé en ce que les groupes (I, II, III) forment des blocs (52a, 52b) superposés les uns au-dessus des autres et présentant des espaces (54) entre eux, qes plaques de refroidissement (20) occupant des positions de profil dans la direction de la superposition dans laquelle les blocs sont décalés d'un angle de 90° les uns par rapport aux autres (Fig. 11).

8. Un garnissage selon l'une quelconque des revendications précédentes dans lesquelles deux desdites surfaces de soutien (21) s'étendent le long desdits bords latéraux pour former des régions limites respectives du garnissage.

8

Fig.1

Fig. 2

Fig.3

Fig.9

Fig.4

Fig.5

Fig.6

Fig.7

Fig.8

Fig.10

Fig.11

Fig.12